# EUROPEAN PATENT SPECIFICATION

(11) **EP 2 724 457 B1**
(45) Date of publication and mention of the grant of the patent: **18.01.2017**
(21) Application number: 12741379.7
(22) Date of filing: 21.06.2012
(51) Int. Cl.: H02M 3/28, H02M 3/335, H02J 1/10, H02J 11/00

(54) **MODULAR POWER SUPPLY FOR A DISTRIBUTION AUTOMATION SYSTEM**
MODULARES STROMVERSORGUNG FÜR EIN VERTEILUNGSAUTOMATIONSSYSTEM
ALIMENTATION ÉLECTRIQUE MODULAIRE POUR UN SYSTÈME D'AUTOMATISATION DE DISTRIBUTION

(30) Priority: 21.06.2011 IN CH20962011
(43) Date of publication of application: 30.04.2014
(73) Proprietor: ABB Schweiz AG, 5400 Baden (CH)
(72) Inventor: HARDIK, Patel, B., Ghatlodiya Ahmedabad 380061 Gujarat (IN)
(74) Representative: Zimmermann & Partner Patentanwälte mbB
(86) International application number: PCT/IB2012/001235
(87) International publication number: WO 2012/176051

(56) References cited:
- EP-A1- 1 783 568
- EP-A1- 2 290 211
- US-A- 5 138 543
- US-A- 6 009 000
- US-A1- 2003 173 937
- US-A1- 2006 239 046
- US-A1- 2006 273 740
- US-A1- 2007 133 236
- SHIGUO LUO ET AL: "A classification and evaluation of paralleling methods for power supply modules", POWER ELECTRONICS SPECIALISTS CONFERENCE, 1999. PESC 99. 30TH ANNUAL I EEE CHARLESTON, SC, USA 27 JUNE-1 JULY 1999, PISCATAWAY, NJ, USA,IEEE, US, vol. 2, 27 June 1999 (1999-06-27), pages 901-908, XP010346798, DOI: 10.1109/PESC.1999.785618 ISBN: 978-0-7803-5421-0

## Description

### FIELD OF INVENTION

The present invention relates to power supplies modules for distribution automation system and more particularly to provision of power supply in remote input output devices such that more than one power supplies modules may be effectively connected together.

### BACKGROUND OF THE INVENTION

Several Distribution Automation (DA) products would need input/output (IO) extension, flexible local IO replacement or additions to offer scalability. In case of remote IOs, meaning self-contained IO device connecting physical, digital/analog I/O to other DA products, the remote IO devices need to be capable of supplying required power to connected DA products. Required power is supplied through use of a power supply module. The power rating of the individual power supply module is usually limited by the available height, board space and by the limitation on volumetric heat dissipation. For example, a power supply module in remote IO device may have a capability to supply maximum 7.5W as an example but the need may be to have capability to supply 15W. In such scenario, two power supply modules may be connected together in parallel. Thus, to supply higher power several parallel connected power supplies may be used. In addition to higher currents, the parallel modules can also offer redundancy, an important factor to achieve reliable, uninterrupted operation and extended life expectancy in the systems.

Independent power supply modules when connected in a parallel configuration may result in each of the independent power supply modules sharing unequal loads including sinking current instead of sourcing due to differences in operating point or output V-I characteristic, even when they are of similar kind. This may result in uneven distribution of electrical and thermal stress, and consequently possible decrease in life of overloaded power supply module. To avoid the problem of unbalanced sharing of load current, it is common to include circuitry for proportionally distributing load current among parallel connected power supply modules depending on their individual capacity. This technique is referred to as "load sharing". Load sharing is typically found in power supplies wherein more than one power module service a single load or has a common point such as on a common output voltage bus which supplies power to multiple loads. Further, the common output voltage bus need to be provided in such a manner that independent power supply module are capable to indicate their respective health status in spite having multiple independent power supply modules connected in parallel. Each power supply module need to be decoupled from any effect from having voltage output from power supply combination be available at the output of the each power supply modules in the combination including that of the faulty supply.

It is common for power supplies to use high frequency switching as a means for efficiently converting the input source to the desired DC voltage level. Power supplies may be designed to operate around large range of high frequency that may also generate noise capable to create interference. The noise in power supply modules connected in parallel may result from cross talk/interference due to the coupling at the input/output and due to interaction from load sharing control loops of various modules used for proportionally distributing load current among parallel connected power supply modules. Such spreading of noise from a module across the entire system may lead to stability issues in any of the power supply modules, eventually risking the stability of the entire system. The task of controlling noise and improving stability is specifically challenging when there is no common input voltage source to the converter power supplies and/or there is a need for power supply modules to support wide input voltage range.

The noise and stability may be improved by effective decoupling by reducing noise and cross talk in the system for reliable operation. Further, decoupling is also required for reliable health indication and communication in the system.

US 2006/239046 A1 describes a converter module for use as a phase in a multiphase DC-DC converter having a data bus for transferring current-sharing information.

US 2003/173937 A1 describes a switching power supply control circuit based on the parallel operation scheme that suppresses ripples in the output voltage.

### SUMMARY OF THE INVENTION

A power supply module according to the invention is defined in claim 1.

In a preferred embodiment, the modular power supply module has a health check module to infer its health status based on comparison of the DC output voltage and a signal derived from an equivalent rectification module connected at the secondary side of the power supply module.

In another aspect a modular power supply system having a plurality of power supply modules coupled at the output using a common output voltage bus and common current share bus is provided. The power supply modules can be connected together in parallel by simply stacking them together without any additional settings or use of additional devices/signals.

In another embodiment the modular power supply system having power supply modules connected in parallel is provided with independent and different input power sources.

In yet another embodiment the modular power supply system has some of the power supply modules provided with an independent and different input power sources and some other power supply modules are provided with a common input power source.

In still yet another embodiment the modular power supply system has at least one power supply modules provided with backup battery input sources.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
Fig. 1 is a circuit diagram illustrating an embodiment of individual power supply module ;
Fig. 2 is a circuit diagram illustrating an embodiment of two power supply modules connected in parallel;
Fig. 3 is a circuit diagram illustrating an embodiment of two power supply modules with noise reduction capability connected in parallel;
Fig. 4 is circuit diagram illustrating an embodiment of health check module in two power supply modules connected in parallel;
Fig. 5 is a block diagram illustrating Standalone mode of operation;
Fig. 6 is a block diagram illustrating multiple power supply mode of operation;
Fig. 7 is a block diagram illustrating multiple power supply mode of operation having a backup battery for input source for one power supply module.

### DETAILED DESCRIPTION OF THE INVENTION

The invention describes a technique to control noise and improve stability for power supply modules that are connectable in parallel for its use in distribution automation system. These power supply modules are modular and are mountable in DIN rail and may have a common input voltage source or individual input source and support a wide range as input voltage.

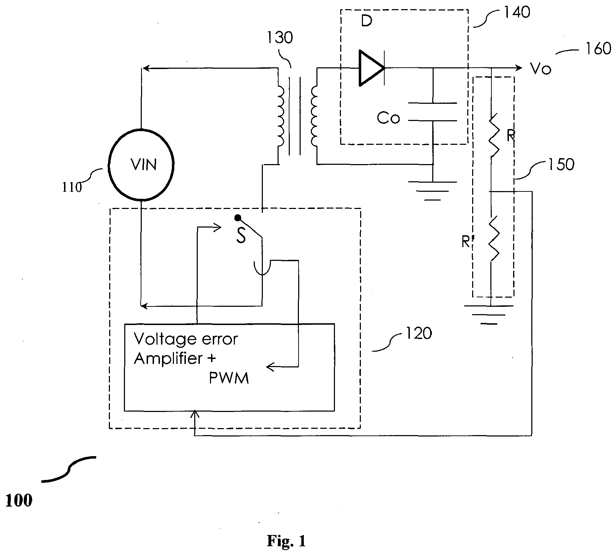

Fig.1 illustrates a power supply module according to a comparative example. Referring to Fig. 1, the power supply module 100 includes an independent input power source 110, a regulating means 120, a rectification module 140 generating output DC voltage 160, a transformer 130 having a primary side connected with the regulating means 120 and the input power source 110, and a secondary side connected to the rectification module 140, a voltage feedback means 150, voltage divider in the illustration, for providing voltage feedback signal to the regulating means 120 to regulate the output DC voltage 160 in the voltage control loop. The regulating means in the illustration is designed with use of a switching element (switch) which is driven by a PWM (Pulse width modulation) based control.

Critical applications where high power and reliable powering solution is desired, more than one power supply modules are connected in parallel. User is provided with the flexibility to connect number of power supplies depending on his requirement including the future needs, where if any application demands more power, user has a flexibility to simply add more power supply modules.

Some additional design considerations that are provided in the invention for high power and reliable powering solution are:
a) All power supply modules may be identical without any segregation of master/slave type for controlling equal loading and are capable of working in "standalone mode" or in "multiple power supply mode" without any need of any selection/external device/extra connection or any fine setting of output voltage.
b) All power supplies may have independent input voltage source i.e. input voltage sources of each parallel connected power supplies (i.e. in "multiple power supply mode") can be different. For example, power supply module 1 (PSM1) can have 220VAC as input source and power supply module 2 (PSM2) can have 110DC as input source. The range may be wide, as an example the voltage for the power supply module may be in the range of 85-264VAC or 88-375VDC. Further, the input voltage sources for a parallel connected power supplies can be a power harvesting system which drains power from the HV power line or be an alternative energy system like photovoltaic system or from a backup battery.
c) Parallel connected power supplies i.e. in "multiple power supply mode" can continue to work, even if any power supply has no input source or any of the power supply from the parallel connected power supply failed. In this mode, all the participating healthy power supplies share load current equally over the complete range of total load [i.e.(Power capacity of one power supply) x (No of power supplies connected together)]. The load sharing to be good even at light loads and have better load regulation.
d) In "multiple power supply mode", if any power supply module will fail or input source of any power supply module will be off, other power supply modules continue to work normally and so system will continue to work normally. Also the not working power supply needs to communicate its health condition to the system. It is desired to have the main output voltage control loop & health information for each module be easily separated (decoupled) from the load share control mechanism. Each power supply module individually indicates and communicates its health status in efficient manner.

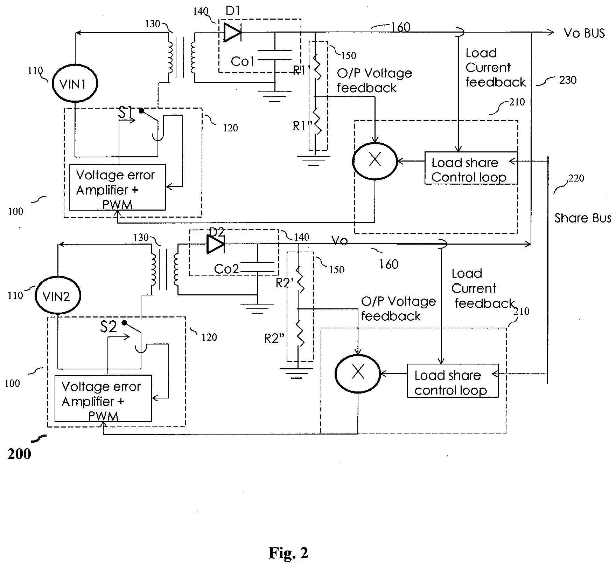

Fig.2 illustrates a power supply system 200 according to a comparative example with two power supply modules 100 connected in parallel with load sharing circuitry. In the parallel system, the figure illustrates a load sharing circuitry having load share control module 210 which is responsible for load sharing control, a common output voltage bus 230 from parallel coupling of output voltages of all the independent power supply modules and a common current share bus (SHARE signal) 220 which is used as a reference for load sharing.

The respective load share control module 210 in each of the power supply modules uses the common current share signal to have active load share control. The operating principle of a load share mechanism is to measure the output current of each individual module and to be able to modify the output voltage of the units, until all participating power supplies deliver equal output currents. Thus, all the power supply modules actively make their load current equal to the common current share signal by appropriately controlling their respective regulating means 120.

The interaction of output voltage control/feedback loop & load sharing control loop are done in such a way that, the power supply module can work in standalone mode and in multiple power supply mode without any need of selection/external device/extra connection.

Further, the independent power supply modules may have a common input source or have independent input sources and each of the power supply module may have input filter & protection, health status indication & communication, output protection (not shown in the figure).

In "multiple power supply mode", all connected power supplies equally share total load current. Normally, each of the power supply modules work below their maximum load capacity. When required power is more than the defined capacity of the single power supply or the power supply system in use, user only needs to put together (side by side) additional required number of power supplies & to stack them together.

The parallel connected power supplies convert their independent input voltage to a defined DC output voltage. Each of the modules will continue to provide independent filtering, protection & health indication/communication. Apart from two terminals of the DC output voltage, the parallel connected power supplies share only one extra terminal (i.e. SHARE signal 220) between them, which indicates the maximum current supplied by any of the connected power supply. Each of the parallel connected power supplies try to make their shared load current equal to the SHARE signal (as in common current share bus), by using active current sharing technique over the complete range of load current even though their respective input sources or voltage ratings maybe different.

Any noise, if significant in magnitude and phase in any of the power supply module, will interfere in the power supply system and can negatively impact the system leading to undesired situations; one such situation being oscillations in power supply output. The source of noise in the voltage control loop in a power supply module 100 may be due to the following as examples are:
- 50/60Hz line frequency
- Variation in load (transient/low frequency)
- Switching of power supply module (high frequency)

The Fourier components of noise undergo gain changes and phase shifts in filter and amplifier components in the system. If for any one of these Fourier components, the gain and phase shifts result in positive rather than negative feedback, the power supply module will have oscillations. So even if the initial source of noise signal dies out, the circuit will continue to oscillate at that particular frequency component. A common way to improve the stability of the system is to increase the phase margin. Hence to achieve stability in the voltage control loop, it is required to have enough phase margin at gain cross over frequency (i.e. frequency at which open loop gain is unity).

Further, taking the case of parallel connected power supply modules, when there are different sources/ratings of input voltages used for parallel connected power supply modules, the regulating means 120 in each module may switch at different duty cycles from one another. Therefore, disturbances due to switching maybe different in each of the parallel connected modules. It may happen that disturbance/noise due to individual input sources 110 in each of the modules or due to switching operation in modules, will reflect on the share bus 220. So each parallel connected module will react to this disturbance, in a different way (because they are operating at different duty cycles) making crosstalk between different control loops prone to unstable operation.

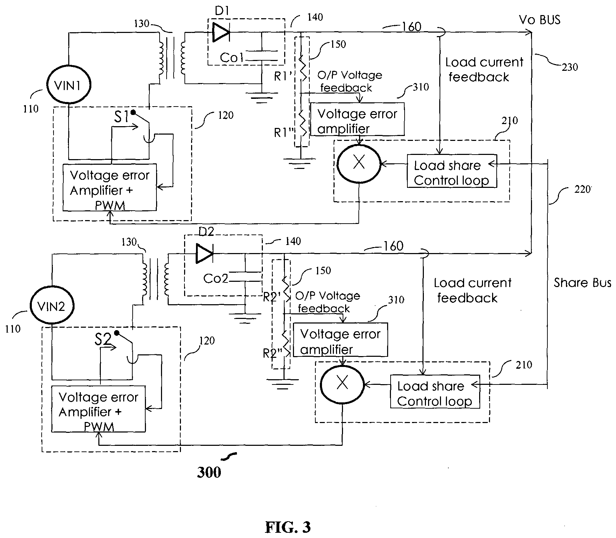

Fig. 3 illustrates a power supply system according to the present invention having two power supply modules connected in parallel effectively decoupled from each other to achieve better stability during operation in standalone mode and in multiple power supply mode. The power supply system has common voltage bus and common current share bus for providing the power to the load by having each of the power supply modules sharing load equally. A filter amplifier 310 (voltage error amplifier) is connected on the secondary side of the power supply module to condition the voltage feedback in the voltage control loop. The load share control module 210 is designed for being slow acting i.e. poor response to high frequency changes, which is acceptable as it responds to equalize the mean (average) output current. The filter amplifier 310 and the voltage error amplifier in the regulating means 120, both provide filtering and gain to help achieve stability over the complete input voltage range. The filter amplifier 310 on secondary side of the power supply module performs the following function:
- Attenuates the noise due to switching and prevent them to go to primary side voltage error amplifier in the regulating means 120.
- Amplify the noise due to 50/60Hz line frequency & Variation in load

Variation affecting the load share control loop is being taken care only by low gain provided by voltage error amplifier on primary 120. The usage of filter amplifier 310 on the secondary side and voltage error amplifier in the PWM based module on the primary side of the regulating means 120, where both the components have different frequency response, provides for high phase margin in power supply module. By using this approach, stability has been achieved over the wide input voltage range (eg. for universal range i.e. 85-264VAC/ 88-375VDC) and/or different input power sources including AC input sources for parallel connected power supply modules with equal load sharing.

Thus, with use of additional filter amplifier component 310, the effect of noise and thereby stability of power supply module and of the system is improved.

Another aspect related to distribution automation system products is to have proper health indicators and health communication for the distribution automation product. For parallel power supply modules, it is desired that the health status indication and communication for individual power supply module is decoupled from that of others. A well-known approach to solve this problem is through the use of decoupling series diodes for each of the independent power supply modules. However these diodes can cause power loss (max power loss = Output current X Diode voltage drop, approx1Volt) which has a negative impact on the system.

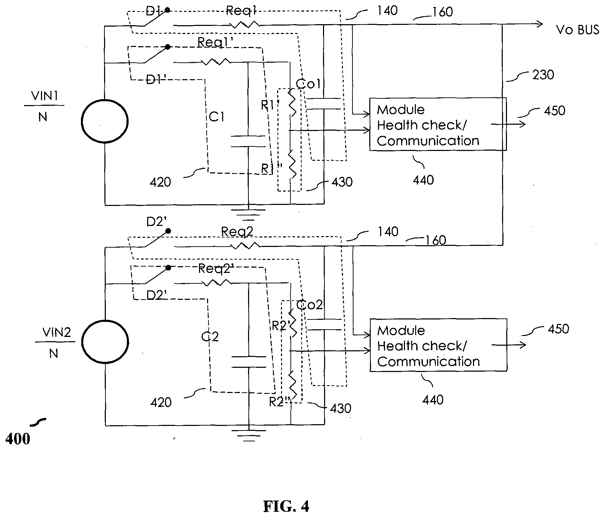

Fig. 4 illustrates a technique for health indication and communication with a circuit diagram depicting secondary side of a power supply module having rectification module 140 connected in parallel with an additional set of components to have an equivalent rectification module 420. The circuit further has a voltage divider 430 provided with the equivalent rectification module 420. A health check module 440, associated with each power supply module consists of a comparator to evaluate health of the respective power supply module based on comparison of the signal from the voltage divider 430 with the common output voltage bus 230 to provide a health status signal 450.. The equivalent rectification module 420 consists of elements similar to the elements in the rectification module 140, however these elements have very low power rating (as they are required only for signal output) and hence consume little power. Since the equivalent rectification module 420 is not directly associated with the common output voltage bus 230, the power supply modules are decoupled with each other for health indication. This technique for health indication and communication is efficient as it does not affect the load current or output voltage from any of the modules involved in supplying power. The health check module has LED indication to indicate health status and a communication module to communicate health status signal in the distribution automation system.

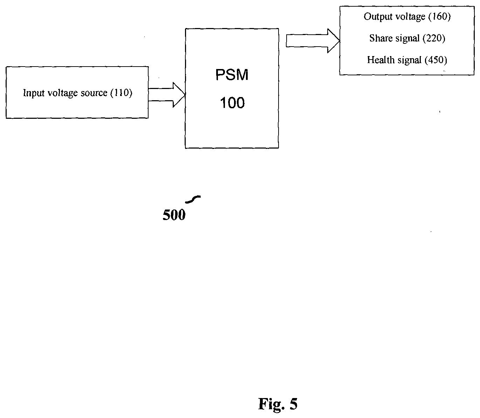

It may be noted that each power supply module provides for output DC voltage, SHARE signal and health signal. As an embodiment, the power supply module function in a standalone mode is as depicted in Fig. 5. Standalone mode is utilized when the required power is within the defined capacity of a single power supply.

As another embodiment, two power supply modules are connected in parallel, though the required power maybe within the defined capacity of a single power supply. In normal condition, when both input voltage sources are available, all connected modules share load current equally. When there is any problem in one of the power supply modules including the input voltage source, the healthy power supply module will continue to work normally by providing the required load current. Here, the power supply modules are working in the multiple power supply mode though the requirement of power is within the capacity of one power supply to increase reliability of the power supply system.

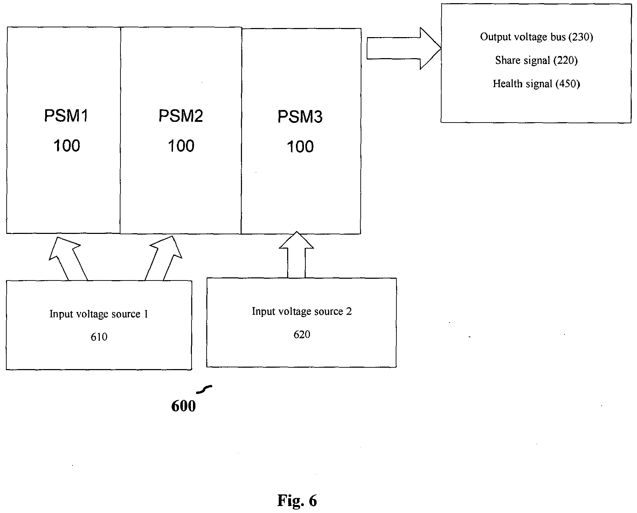

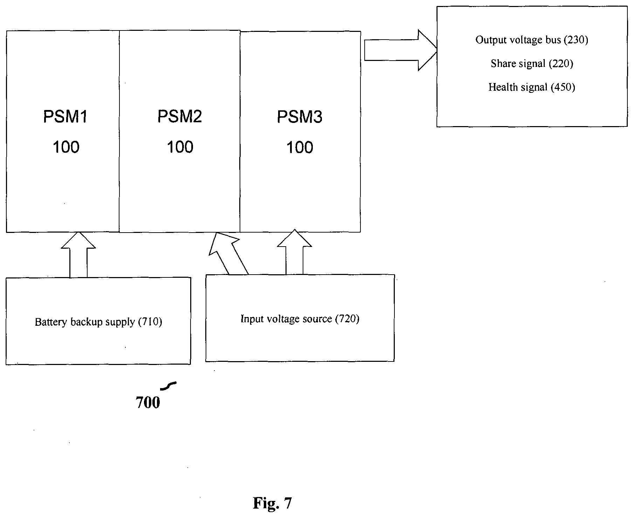

As another embodiment, multiple power supply modules may be connected together having multiple combinations of input voltage source to improve reliability in a distribution automation system. The multiple power supply modules may share a common input voltage source or have independent input voltage sources. Further, as illustrated in Fig. 6 and Fig. 7, the multiple power supply modules may have input voltage source derived from input voltage sources that are less in number compared with the number of power supply modules connected together. Here, as an example illustrated in Fig. 6, two input voltage sources (610 and 620) are used to provide input voltage to three power supply modules 100 connected together. Fig. 7, illustrates again a case with two input voltage sources (710 and 720) for three power supply modules (100) but depicting use of a battery backup supply 710 to supply to a power supply module.

While only certain features of the invention have been illustrated and described herein, many modifications and changes will occur to those skilled in the art.

## Claims

1. A power supply module (100) for distribution automation system, the power supply module (100) being connectable in parallel and comprising:
a means to connect an input power source (110) to the power supply module and to connect the output of the power supply module to external devices;
a regulating means (120) comprising a switching element which is controlled by a voltage error amplifier to regulate an output DC voltage (160);
a rectification module (140) generating the output DC voltage (160);
a transformer (130) having a primary side connected with the regulating means (120) and the one or more power input power source, and the secondary side connected to the rectification module (140);
wherein the switching element is adapted to control the current on the primary side of the transformer (130);
a voltage feedback means (150) for providing a voltage feedback signal;
a load share control module (210) responsible for load sharing control having a load share signal for controlling load sharing for the power supply module;
wherein, the power supply module (100) is additionally provided with a filter amplifier (310) for conditioning the voltage feedback signal in the voltage control loop, the said filter amplifier (310) being connected on the secondary side of the transformer (130) for reducing the effect of noise in the power supply module, wherein the filter amplifier (310) attenuates the noise due to switching and prevents the noise to go to the voltage error amplifier in the primary side of the regulating means (120), and amplifies the noise due to 50/60Hz line frequency and variation in load;
wherein the output signal of the filter amplifier (310) is combined with an output signal of a load share control loop within the load share control module (210) to form an output signal of the load share control module (210), the load share control module (210) receiving the load share signal from a load share bus (220) and receiving a load current feedback from the secondary side of the transformer (130), wherein the output signal of the load share control module (210) is fed into the voltage error amplifier of the regulating means (120),
wherein the power supply module (100) actively makes the load current equal to the load share signal by controlling the regulating means (120) and wherein variations affecting a load share control loop are taken care of only by the low gain provided by the voltage error amplifier on the primary side of the regulating means (120),
and wherein the filter amplifier (310) on the secondary side and the voltage error amplifier on the primary side of the regulating means (120) have a different frequency response to achieve stability over a wide input voltage range and different input power sources for parallel connected power supply modules with equal load sharing.

2. The power supply module of claim 1, wherein the voltage feedback means (150) comprises a voltage divider having resistive elements.

3. The power supply module of claim 1, wherein the filter amplifier (310) attenuates high frequency noises appearing in the power supply module.

4. The power supply module of claim 1, wherein the power supply module further comprises a health check module (440) to infer health status of the power supply module based on comparison of the output DC voltage (160) and a signal derived from an equivalent rectification module (420) connected at the secondary of the transformer (130).

5. A modular power supply system (300) for distribution automation system comprising:
a plurality of power supply modules (100) with at least one power supply module according to claim 1, wherein the means to connect to an input power source (110) to the power supply module (100) and to connect the output of the power supply module (100) to external devices are means to connect to one or more input power sources (110) and to connect the respective outputs in parallel;
a common output voltage bus (230) connecting the respective output DC voltage from the plurality of power supply modules (100);
a common current share bus (220) connecting load share signal for the respective load share control module (210) from the plurality of power supply modules (100);
and wherein at least one power supply module (100) from the plurality of power supply modules (100) are connected together at output in parallel.

6. The modular power supply system of claim 5, wherein the plurality of power supply modules are provided with independent input power sources for each of the power supply modules.

7. The modular power supply system of claim 5, wherein at least two power supply modules from the plurality of power supply modules are provided with a common input power source.

8. The modular power supply system of claim 5, wherein at least one power supply modules from the plurality of power supply modules is provided with a backup battery input source.

9. The modular power supply system of claim 5, wherein at least two power supply modules from the plurality of power supply modules are connected in parallel using their respective connecting means to connect their respective output DC voltage terminal to the common output voltage bus (230) and to connect their respective load share signal for their respective load share control module (210) with the common current share bus (220) without any additional setting or use of additional device or additional signal from the modular power supply system for proportional load sharing in the said at least two power supply modules connected in parallel.

## Patentansprüche

1. Energieversorgungsmodul (100) für ein Verteilungsautomatisierungssystem, wobei das Energieversorgungsmodul (100) parallelgeschaltet werden kann und umfasst:
eine Einrichtung zum Aufschalten einer Eingangsenergiequelle (110) auf das Energieversorgungsmodul, und zum Aufschalten des Ausgangs des Energieversorgungsmoduls auf externe Geräte;
eine Regeleinrichtung (120) mit einem Schaltelement, das durch einen Spannungsfehlerverstärker zum Regeln einer Ausgangsgleichspannung (160) gesteuert wird;
ein Gleichrichtungsmodul (140), das die Ausgangsgleichspannung (160) erzeugt;
einen Transformator (130) mit einer Primärseite, die mit der Regeleinrichtung (12) und der einen oder mehreren Energieeingangsenergiequellen verbunden ist, und wobei die Sekundärseite auf das Gleichrichtungsmodul (140) aufgeschaltet ist;
wobei das Schaltelement dazu angepasst ist, den Strom auf der Primärseite des Transformators (130) zu steuern;
eine Spannungsrückkopplungseinrichtung (150), um ein Spannungsrückkopplungssignal bereitzustellen;
ein Lastverteilungssteuermodul (210), das für eine Lastverteilungssteuerung mit einem Lastverteilungssignal zuständig ist, um die Lastverteilung für das Energieversorgungsmodul zu steuern;
wobei das Energieversorgungsmodul (100) zusätzlich mit einem Filterverstärker (310) versehen ist, um das Spannungsrückkopplungssignal in die Spannungsregelschleife einzugeben, wobei der Filterverstärker (310) auf die Sekundärseite des Transformators (130) aufgeschaltet ist, um die Rauschwirkung im Energieversorgungsmodul zu reduzieren, wobei der Filterverstärker (310) das vom Schalten herrührende Rauschen dämpft und verhindert, dass das Rauschen in die Primärseite der Regeleinrichtung (120) zum Spannungsfehlerverstärker gelangt, und das von einer Netzfrequenz von 50/60 Hz und einer Lastschwankung herrührende Rauschen verstärkt;
wobei das Ausgangssignal des Filterverstärkers (310) mit einem Ausgangssignal einer Lastverteilungsregelschleife im Lastverteilungssteuermodul (210) zum Bilden eines Ausgangssignals des Lastverteilungssteuermoduls (210) kombiniert wird, wobei das Lastverteilungssteuermodul (210) das Lastverteilungssignal von einem Lastverteilungsbus (220) empfängt und eine Laststromrückkopplung von der Sekundärseite des Transformators (130) empfängt, wobei das Ausgangssignal des Lastverteilungssteuermoduls (210) in den Spannungsfehlerverstärker der Regeleinrichtung (120) eingespeist wird,
wobei das Energieversorgungsmodul (100) den Laststrom durch Steuern der Regeleinrichtung (120) aktiv dem Lastverteilungssignal gleichmacht, und wobei Schwankungen, die sich auf eine Lastverteilungsregelschleife auswirken, nur durch die geringe Verstärkung berücksichtigt werden, die durch den Spannungsfehlerverstärker auf der Primärseite der Regeleinrichtung (120) bereitgestellt wird, und wobei der Filterverstärker (310) auf der Sekundärseite und der Spannungsfehlerverstärker auf der Primärseite der Regeleinrichtung (120) einen unterschiedlichen Frequenzgang zum Erzielen von Stabilität über einen weiten Eingangsspannungsbereich und unterschiedliche Eingangsenergiequellen für parallelgeschaltete Energieversorgungsmodule bei gleicher Lastverteilung haben.

2. Energieversorgungsmodul nach Anspruch 1, wobei die Spannungsrückkopplungseinrichtung (150) einen Spannungsteiler mit Widerstandselementen umfasst.

3. Energieversorgungsmodul nach Anspruch 1, wobei der Filterverstärker (310) im Energieversorgungsmodul erscheinendes Hochfrequenzrauschen dämpft.

4. Energieversorgungsmodul nach Anspruch 1, wobei das Energieversorgungsmodul darüber hinaus ein Befindlichkeitsprüfmodul (440) zum Erschließen des Befindlichkeitsstatus des Energieversorgungsmoduls auf Grundlage eines Vergleichs der Ausgangsgleichspannung (160) und eines Signals umfasst, das von einem äquivalenten Gleichrichtungsmodul (420) abgeleitet ist, das an die Sekundärseite des Transformators (130) angeschlossen ist.

5. Modulares Energieversorgungssystem (300) für ein Verteilungsautomatisierungssystem, Folgendes umfassend:
mehrere Energieversorgungsmodule (100) mit mindestens einem Energieversorgungsmodul nach Anspruch 1, wobei es sich bei den Einrichtungen zum Aufschalten einer Eingangsenergiequelle (110) auf das Energieversorgungsmodul (100) und zum Aufschalten des Ausgangs des Energieversorgungsmoduls (100) auf externe Geräte um Einrichtungen zum Aufschalten auf eine oder mehrere Eingangsenergiequellen (110) und zum Parallelschalten der jeweiligen Ausgänge handelt;
einen gemeinsamen Ausgangsspannungsbus (230), der die jeweiligen Ausgangsgleichspannungen aus den mehreren Energieversorgungsmodulen (100) verbindet;
einen gemeinsamen Stromverteilungsbus (220), der ein Lastverteilungssignal für das jeweilige Lastverteilungssteuermodul (210) von den mehreren Energieversorgungsmodulen (100) aufschaltet;
und wobei mindestens ein Energieversorgungsmodul (100) von den mehreren Energieversorgungsmodulen (100) zusammen am Ausgang parallelgeschaltet sind.

6. Modulares Energieversorgungssystem nach Anspruch 5, wobei die mehreren Energieversorgungsmodule mit unabhängigen Eingangsenergiequellen für jedes der Energieversorgungsmodule versehen sind.

7. Modulares Energieversorgungssystem nach Anspruch 5, wobei mindestens zwei Energieversorgungsmodule der mehreren Energieversorgungsmodule mit einer gemeinsamen Eingangsenergiequelle versehen sind.

8. Modulares Energieversorgungssystem nach Anspruch 5, wobei mindestens ein Energieversorgungsmodul der mehreren Energieversorgungsmodule mit einer Pufferbatterie-Eingangsquelle versehen ist.

9. Modulares Energieversorgungssystem nach Anspruch 5, wobei mindestens zwei Energieversorgungsmodule der mehreren Energieversorgungsmodule unter Verwendung ihrer jeweiligen Anschlusseinrichtung parallelgeschaltet sind, um ihren jeweiligen Ausgangsgleichspannungsanschluss auf den gemeinsamen Ausgangsspannungsbus (230) aufzuschalten, und um ihr jeweiliges Lastverteilungssignal für das jeweilige Lastverteilungssteuermodul (210) mit dem gemeinsamen Stromverteilungsbus (220) zu verbinden, und zwar ohne zusätzliche Einstellung oder Verwendung einer zusätzlichen Vorrichtung oder eines zusätzlichen Signals vom modularen Energieversorgungssystem zur proportionalen Lastverteilung in den mindestens zwei parallelgeschalteten Energieversorgungsmodulen.

## Revendications

1. Alimentation électrique modulaire (100) pour système d'automatisation de distribution, l'alimentation électrique modulaire (100) pouvant être connectée en parallèle et comprenant:
un moyen pour connecter une source d'alimentation d'entrée (110) à l'alimentation électrique modulaire et pour connecter la sortie de l'alimentation électrique modulaire à des dispositifs externes;
un moyen de régulation (120) comprenant un élément de commutation qui est commandé par un amplificateur d'erreur de tension pour réguler une tension continue de sortie (160);
un module de rectification (140) générant la tension continue de sortie (160);
un transformateur (130) présentant un côté primaire raccordé au moyen de régulation (120) et aux une ou plusieurs sources d'alimentation d'entrée, et le côté secondaire étant connecté au module de rectification (140);
dans laquelle l'élément de commutation est adaptée pour commander le courant du côté primaire du transformateur (130);
un moyen de rétroaction de tension (150) destiné à fournir un signal de rétroaction de tension;
un module de commande de partage de charge (210) responsable de la commande de partage de charge présentant un signal de partage de charge pour commander le partage de charge pour l'alimentation électrique modulaire;
dans laquelle l'alimentation électrique modulaire (100) est par ailleurs munie d'un amplificateur de filtre (310) destiné à conditionner le signal de rétroaction de tension dans la boucle de commande de tension, ledit amplificateur de filtre (310) étant connecté au côté secondaire du transformateur (130) pour réduire l'effet du bruit dans l'alimentation électrique modulaire, dans lequel l'amplificateur de filtre (310) atténue le bruit dû à la commutation et empêche le bruit d'aller à l'amplificateur d'erreur de tension du côté primaire du moyen de régulation (120), et amplifie le bruit dû à la fréquence de ligne de 50/60Hz et à la variation de charge;
dans laquelle le signal de sortie de l'amplificateur de filtre (310) est combiné avec un signal de sortie d'une boucle de commande de partage de charge dans le module de commande de partage de charge (210) pour former un signal de sortie du module de commande de partage de charge (210), le module de commande de partage de charge (210) recevant le signal de partage de charge d'un bus de partage de charge (220) et recevant une rétroaction de courant de charge du côté secondaire du transformateur (130), dans laquelle le signal de sortie du module de commande de partage de charge (210) est alimenté vers l'amplificateur d'erreur de tension du moyen de régulation (120),
dans laquelle l'alimentation électrique modulaire (100) rend activement le courant de charge égal au signal de partage de charge en commandant le moyen de régulation (120) et dans laquelle les variations affectant une boucle de commande de charge ne sont prises en compte que par le faible gain fourni par l'amplificateur d'erreur de tension du côté primaire du moyen de régulation (120),
et dans laquelle l'amplificateur de filtre (310) du côté secondaire et l'amplificateur d'erreur de tension du côté primaire du moyen de régulation (120) ont une réponse en fréquence différente pour obtenir une stabilité sur une ample plage de tensions d'entrée et différentes sources d'alimentation d'entrée pour les alimentations électriques modulaires connectées en parallèle à partage de charge égal.

2. Alimentation électrique modulaire selon la revendication 1, dans laquelle le moyen de rétroaction de tension (150) comprend un diviseur de tension présentant des éléments résistifs.

3. Alimentation électrique modulaire selon la revendication 1, dans laquelle l'amplificateur de filtre (310) atténue les bruits de hautes fréquences apparaissant dans l'alimentation électrique modulaire.

4. Alimentation électrique modulaire selon la revendication 1, dans laquelle l'alimentation électrique modulaire comprend par ailleurs un module de contrôle de santé (440) destiné à déduire l'état de santé de l'alimentation électrique modulaire sur base de la comparaison de la tension continue de sortie (160) et d'un signal dérivé d'un module de rectification équivalent (420) connecté au secondaire du transformateur (130).

5. Système d'alimentations électriques modulaires (300) pour système d'automatisation de distribution, comprenant:
une pluralité d'alimentations électriques modulaires (100) avec au moins une alimentation électrique modulaire selon la revendication 1, où les moyens pour connecter à une source d'alimentation d'entrée (110) de l'alimentation électrique modulaire (100) et pour connecter la sortie de l'alimentation électrique modulaire (100) à des dispositifs externes sont des moyens pour connecter à une ou plusieurs sources d'alimentation d'entrée (110) et pour connecter les sorties respectives en parallèle;
un bus de tension de sortie commun (230) connectant la tension continue de sortie respective de la pluralité d'alimentations électriques modulaires (100);
un bus de partage de courant commun (220) connectant le signal de partage de charge pour le module de commande de partage de charge respectif (210) de la pluralité d'alimentations électriques modulaires (100);
et dans lequel au moins une alimentation électrique modulaire (100) parmi la pluralité d'alimentations électriques modulaires (100) sont connectées entre elles à la sortie en parallèle.

6. Système d'alimentations électriques modulaires selon la revendication 5, dans lequel la pluralité d'alimentations électriques modulaires sont munies de sources de courant d'entrée indépendantes pour chacune des alimentations électriques modulaires.

7. Système d'alimentations électriques modulaires selon la revendication 5, dans lequel au moins deux alimentations électriques modulaires parmi la pluralité d'alimentations électriques modulaires sont munies d'une source d'alimentation d'entrée commune.

8. Système d'alimentations électriques modulaires selon la revendication 5, dans lequel au moins une alimentation électrique modulaire parmi la pluralité d'alimentations électriques modulaires est munie d'une source d'entrée à batterie de secours.

9. Système d'alimentations électriques modulaires selon la revendication 5, dans lequel au moins deux alimentations électriques modulaires parmi la pluralité d'alimentations électriques modulaires sont connectées en parallèle à l'aide de leur moyen de connexion respectif pour connecter leur borne de tension continue de sortie respective au bus de tension de sortie commun (230) et pour connecter leur signal de partage de charge respectif pour leur module de commande de partage de charge respectif (210) au bus de partage de courant commun (220) sans réglage additionnel ou utilisation d'un dispositif additionnel ou signal additionnel du système d'alimentations électriques modulaires pour le partage de charge proportionnel dans lesdites au moins deux alimentations électriques modulaires connectées en parallèle.
